# EUROPÄISCHE PATENTANMELDUNG

(11) **EP 2 489 492 A1**
(43) Veröffentlichungstag der Anmeldung: **22.08.2012**
(21) Anmeldenummer: 11154822.8
(22) Anmeldetag: 17.02.2011
(51) Int. Cl.: B29C 45/14, B29C 45/00, B29C 45/26

(54) **Verfahren zum partiellen Schwingungsausgleich bei Kunststoff-Formteilen**

(71) Anmelder: Bayer MaterialScience AG, 51368 Leverkusen (DE)
(72) Erfinder: Künzel, Roland, 51381 Leverkusen (DE); Berger, Armin, 40764 Langenfeld (DE); Protte, Rainer, 41542 Dormagen (DE); Klimmasch, Thomas, 51379 Leverkusen (DE)

(57) **Zusammenfassung**

Die vorliegende Erfindung betrifft ein Verfahren zur Herstellung von Kunststoffformteilen, bei denen ein partieller Schwingungsausgleich vorgenommen wurde, sowie nach diesem Verfahren hergestellte Kunststoffformteile.

## Beschreibung

Die vorliegende Erfindung betrifft ein Verfahren zur Herstellung von Kunststoffformteilen, bei denen ein partieller Schwingungsausgleich vorgenommen wurde, sowie nach diesem Verfahren hergestellte Kunststoffformteile.

Bei der Herstellung von Bauteilen, bei denen eine partielle Durchleuchtung am fertigen Bauteil gewünscht ist - wie z.B. Bedienkonsolen im Automobilbereich, deren Bedientasten im Dunkeln mittels partieller Hinterleuchtung für den Benutzer sichtbar gemacht werden sollen - ist es Stand der Technik, dass gegebenenfalls bedruckte Kunststofffolien mittels Fenstertechnik mit einem thermoplastischen Kunststoff hinterspritzt werden. Das Verfahren des Hinterspritzens von Kunststofffolien mit thermoplastischen Kunststoffen mittels Spritzgießprozess wird als Film Insert Moulding (FIM) bezeichnet. Die sogenannte Fenstertechnik bietet die Möglichkeit, die Folie an den später zu hinterleuchtenden Stellen mit Stempeln oder Schiebern zu tuschieren und so von thermoplastischem Kunststoffmaterial frei zu halten.

Bei diesem Verfahren besteht aber das Problem, dass bei der Verarbeitung von thermoplastischen Kunststoffen im Spritzgießprozess beim Abkühlen das Bauteil schwindet, die Folie aber in den nicht nicht hinterspritzten Bereichen nicht mitschwindet. Dadurch treten in diesen Bereichen Beulen bzw. Dellen auf, die zu einer spürbaren Unebenheit der Bauteiloberfläche führen.

Zur Verringerung dieses Problems wurden bisher entweder die thermoplastischen Kunststoffe zum Hinterspritzen mit Glasfasern gefüllt, da dadurch die Schwindung des Kunststoffs verringert werden kann, oder sehr dicke Folien verwendet, um das Entstehen von Beulen bzw. Dellen zu verhindern. Durch keine der beiden Möglichkeiten konnte das Problem jedoch bisher vollständig beseitigt werden, ohne dass nicht gleichzeitig weitere Probleme in der Endanwendung entstanden. Der Einsatz von Glasfasern als zusätzlichem Füllstoff bringt nicht nur zusätzliche Materialkosten und apparativen Aufwand mit sich, sondern führt auch zu verstärkten Werkzeugverschleiß bei der Verarbeitung der gefüllten Kunststoffmasse. Zudem konnte durch diese Maßnahme in vielen Fällen die Bildung von Beulen bzw. Dellen verringert, aber nicht vollständig vermieden werden. Der Einsatz dickerer Kunststofffolien setzt neben zusätzlichen Materialkosten für die größere Foliendicke deren Lichtdurchlässigkeit herab - insbesondere wenn die Folie zusätzlich noch bedruckt wurde - und erfordert stärkere Lichtquellen zur ausreichenden Hinterleuchtung. Außerdem steht das Bauteil in den nicht hinterspritzten Bereichen unter Spannung, was die Gefahr von Rissbildung oder Bruch in diesen Bereichen mit sich bringt.

Es bestand demnach Bedarf, ein Verfahren zur Herstellung von Bauteilen, bei denen eine partielle Durchleuchtung am fertigen Bauteil gewünscht ist, bereitzustellen, welche die vorangehend genannten Nachteile nicht aufweist.

Die Aufgabe, die der vorliegenden Erfindung zugrunde lag, bestand daher darin, ein solches Verfahren zur Herstellung von Bauteilen, bei denen eine partielle Durchleuchtung am fertigen Bauteil gewünscht ist, aufzufinden. Dabei sollte insbesondere die Bildung von Beulen bzw. Dellen im fertigen Bauteil vermieden werden, ohne dass zusätzliche Materialkosten in Kauf genommen werden müssen. Zudem sollte die Lichtdurchlässigkeit des Bauteils an den zu hinterleuchtenden Stellen möglichst hoch sein, so dass eine Hinterleuchtung auch bereits mit schwachen, energiesparenden Lichtquellen möglich ist.

Überraschend wurde diese Aufgabe durch ein Verfahren zur Herstellung eines Kunststoffformteils gelöst, bei dem eine gegebenenfalls bedruckte Kunststofffolie teilflächig mit thermoplastischem Kunststoff hinterspritzt und nach dem Abkühlen durch mindestens partielle Erwärmung einer Nachschwindung unterzogen wird.

Gegenstand der vorliegenden Erfindung ist daher ein Verfahren zur Herstellung eines Kunststoffformteils, wobei
A) eine Kunststofffolie auf einer Seite mit wenigstens einem thermoplastischen Kunststoff hinterspritzt wird, wobei eine oder mehrere Teilflächen der Kunststofffolie nicht hinterspritzt werden, und
B) das unter Schritt A) erhaltene Kunststoffformteil abgekühlt wird,
   dadurch gekennzeichnet, dass
C) anschließend wenigstens die nicht hinterspritzten Bereiche des unter Schritt B) erhaltenen Kunststoffformteils erneut erhitzt werden.

Mit dem erfindungsgemäßen Verfahren lassen sich Beulen bzw. Dellen in den nicht hinterspritzten Bereichen vollständig entfernen. Das erfindungsgemäße Verfahren erfordert keine zusätzlichen Füllstoffe zur Herabsetzung der Schwindung des thermoplastischen Kunststoffs und bietet die Möglichkeit, dünne, gut lichtdurchlässige Kunststofffolien einzusetzen, die auch mit schwachen Lichtquellen hinterleuchtet werden können. Ein weiterer Vorteil des erfindungsgemäßen Verfahrens ist zudem, dass das Bauteil in den nicht hinterspritzten Bereichen nicht unter Spannung steht, so dass eine diesbezügliche Gefahr von Rissbildung oder Bruch in diesen Bereichen nicht besteht.

Die in Schritt A) eingesetzte Kunststofffolie kann ein oder beidseitig bedruckt oder mit Farbstoffen oder Pigmenten gefärbt sein. Bevorzugt ist die in Schritt A) eingesetzte Kunststofffolie einseitig bedruckt. Für den Fall, dass eine einseitig bedruckte Kunststofffolie in Schritt A) eingesetzt wird, kann diese entweder auf der bedruckten Seite oder auf der nicht bedruckten Seite mit dem thermoplastischen Kunststoff hinterspritzt werden. Sofern das Hinterspritzen auf der bedruckten Seite erfolgt, eignen sich zum Bedrucken insbesondere thermostabile Druckfarben, wie sie beispielsweise in der WO-A 2009/138217 beschrieben sind.

In bevorzugten Ausführungsformen des erfindungsgemäßen Verfahrens ist die in Schritt A) eingesetzte Kunststofffolie verformt. Eine solche Verformung kann vor oder nach dem etwaigen Bedrucken, bevorzugt jedoch nach dem etwaigen Bedrucken durch dem Fachmann bekannte Verfahren erfolgen. Als mögliche Verfahren zum Verformen sind beispielhaft das mechanische Verformen, das Hydroforming und das Verfahren der Hochdruckverformung - auch als High Pressure Forming (HPF) Verfahren bezeichnet - genannt. Bevorzugt ist das Verfahren der Hochdruckverformung, welches z.B. in WO-A 2009/043539 oder EP-A 371 425 beschrieben ist.

Bevorzugt werden in Schritt C) wenigstens die nicht hinterspritzten Bereiche des unter Schritt B) erhaltenen Kunststoffformteils auf wenigstens eine Temperatur erhitzt, mit der beim Abkühlen eine Schwindung und/oder Schrumpfung der Kunststofffolie in den nicht hinterspritzten Bereichen erzielt werden kann. Vorzugsweise werden in Schritt C) wenigstens die nicht hinterspritzten Bereiche des unter Schritt B) erhaltenen Kunststoffformteils auf wenigstens eine Temperatur im Bereich oberhalb der Temperatur von 70°C unterhalb der Glasübergangstemperatur Tg, bevorzugt auf wenigstens eine Temperatur im Bereich oberhalb der Temperatur von 50°C unterhalb der Glasübergangstemperatur Tg des Kunststoffs der Kunststofffolie erhitzt, d.h. auf wenigstens eine Temperatur von mehr als Tg minus 70°C (wenigstens eine Temperatur im Bereich von > Tg - 70°C), bevorzugt auf wenigstens eine Temperatur von mehr als Tg minus 50°C (wenigstens eine Temperatur im Bereich von > Tg - 50°C) des Kunststoffs der Kunststofffolie erhitzt. In bevorzugten Ausführungsformen werden in Schritt C) wenigstens die nicht hinterspritzten Bereiche des unter Schritt B) erhaltenen Kunststoffformteils auf wenigstens eine Temperatur im Bereich von 50°C unterhalb der Glasübergangstemperatur Tg bis 50°C oberhalb der Glasübergangstemperatur Tg des Kunststoffs der Kunststofffolie erhitzt. Vorzugsweise erfolgt das Erhitzen in Schritt C) auf wenigstens eine Temperatur im Bereich von 40°C unterhalb der Glasübergangstemperatur Tg bis 40°C oberhalb der Glasübergangstemperatur Tg des Kunststoffs der Kunststofffolie. In bevorzugten Ausführungsformen der vorliegenden Erfindung erfolgt das Erhitzen in Schritt C) auf wenigstens eine Temperatur im Bereich von 10°C unterhalb der Glasübergangstemperatur Tg bis 40°C oberhalb der Glasübergangstemperatur Tg des Kunststoffs der Kunststofffolie. Ganz besonders bevorzugt erfolgt das Erhitzen auf wenigstens eine Temperatur oberhalb der Glasübergangstemperatur Tg in den vorangehend aufgeführten Bereichen oberhalb der Glasübergangstemperatur Tg des Kunststoffs der Kunststofffolie. Ganz besonders bevorzugt sind dabei Temperaturen bis 50°C oberhalb, vorzugsweise bis 40°C oberhalb der Glasübergangstemperatur Tg des Kunststoffs der Kunststofffolie. Für den Fall, dass die Kunststofffolie wenigstens ein Polycarbonat oder Copolycarbonat enthält erfolgt das Erhitzen der nicht hinterspritzten Bereiche in Schritt C) bevorzugt auf wenigstens eine Temperatur oberhalb von 60°C, besonders bevorzugt oberhalb von 70°C, ganz besonders bevorzugt oberhalb 100°C.

Die Glasübergangstemperaturen Tg werden mittels dynamischer Differenzkalorimetrie (DSC) gemäß der Norm ISO 113557-2 bei einer Heizrate von 10 K/min mit Definition der Tg als Mittelpunkttemperatur (Tangentenmethode) bestimmt.

Die Temperaturen, auf die in Schritt C) wenigstens die nicht hinterspritzten Bereiche des unter Schritt B) erhaltenen Kunststoffformteils erhitzt werden, können beispielsweise mittels einer handelsüblichen Infrarot-Kamera, vorzugsweise handelsüblichen Infrarot-Linienkameras zur berührungslosen Temperaturmessung ermittelt werden. Hierfür eignen sich beispielsweise entsprechende Infrarot-Kameras der Firma Bartec Messtechnik und Sensorik, wie z.B. Zeilenpyrometer der Firma Bartec Messtechnik und Sensorik oder Infrarot-Linienkameras der Firma Dias Infrared GmbH.

Bevorzugt werden in Schritt C) wenigstens die nicht hinterspritzten Bereiche des unter Schritt B) erhaltenen Kunststoffformteils für weniger als 60 Sekunden, bevorzugt für weniger als 20 Sekunden, besonders bevorzugt für weniger als 15 Sekunden, ganz besonders bevorzugt für weniger als 10 Sekunden auf die genannte(n) Temperatur(en) erhitzt. Eine möglichst kurze Zeitspanne ist dabei insbesondere aus Gründen der Verfahrenseffizienz und hinsichtlich der Temperaturbelastung der Kunststoffmaterialien wünschenswert und vorteilhaft. Es ist jedoch auch möglich, die die nicht hinterspritzten Bereiche des unter Schritt B) erhaltenen Kunststoffformteils für einen längeren Zeitraum auf die genannte(n) Temperatur(en) zu erhitzen.

Das Erhitzen in Schritt C) kann dabei durch jede geeignete Form der Wärmezufuhr erfolgen. Dabei kann das Erhitzen partiell an den nicht hinterspritzten Bereichen und deren Umgebung oder vollflächig über die gesamte Oberfläche des Bauteils hinweg erfolgen. Es sind auch beliebige Möglichkeiten zwischen den vorangehend genannten Alternativen möglich. Das Erhitzen kann sowohl innerhalb des Spritzgießwerkzeuges als auch außerhalb des Spritzgießwerkzeuges erfolgen. Innerhalb des Spritzgießwerkzeuges ist beispielsweise eine Wärmezufuhr mittels keramischen Heizelementen möglich. Außerhalb des Spritzgießwerkzeuges ist beispielsweise eine Wärmezufuhr mittels IR-Strahler oder Warmluft möglich.

Nach dem erneuten Erhitzen in Schritt C) wird das so erhaltene Kunststoffformteil abgekühlt. Dabei erfolgt das Abkühlen bevorzugt auf eine Temperatur von weniger als 50 °C, besonders bevorzugt von weniger als 40°, ganz besonders bevorzugt von weniger als 30°C.

Die in Schritt A) eingesetzte Kunststofffolie weist bevorzugt eine Dicke von 50 µm bis 500 µm, besonders bevorzugt von 75 µm bis 400 µm, ganz besonders bevorzugt von 100 µm bis 300 µm auf.

Bei der in Schritt A) eingesetzten Kunststofffolie handelt es sich bevorzugt um eine Kunststofffolie enthaltend einen oder mehrere thermoplastische Kunststoffe, besonders bevorzugt um eine solche, die im Wesentlichen aus einem oder mehreren thermoplastischen Kunststoffen und üblichen Kunststoffadditiven besteht.

Als thermoplastische Kunststoffe kommen unabhängig voneinander für die Kunststofffolie sowie den oder die thermoplastischen Kunststoffe zum Hinterspritzen kommen unabhängig voneinander thermoplastische Kunststoffe ausgewählt aus Polymerisaten von ethylenisch ungesättigten Monomeren und/oder Polykondensaten von bifunktionellen reaktiven Verbindungen in Frage.

Besonders geeignete thermoplastische Kunststoffe sind Polycarbonate oder Copolycarbonate auf Basis von Diphenolen, Poly- oder Copolyacrylate und Poly- oder Copolymethacrylate wie beispielhaft und vorzugsweise Polymethylmethacrylat, Poly- oder Copolymere mit Styrol wie beispielhaft und vorzugsweise transparentes Polystyrol, Polystyrolacrylnitril (SAN) oder Acrylnitril-Butadien-StyrolCopolymerisate (ABS), transparente thermoplastische Polyurethane, sowie Polyolefine, wie beispielhaft und vorzugsweise transparente Polypropylentypen oder Polyolefine auf der Basis von cyclischen Olefinen (z.B. TOPAS^{®}, Hoechst), Poly- oder Copolykondensate der Terephthalsäure, wie beispielhaft und vorzugsweise Poly- oder Copolyethylenterephthalat (PET oder CoPET), glycolmodifiziertes PET (PETG) oder Poly- oder Copolybutylenterephthalat (PBT oder CoPBT) oder Mischungen aus den vorangehend genannten.

Ganz besonders bevorzugt sind Polycarbonate oder Copolycarbonate, insbesondere mit mittleren Molekulargewichten M_{w}, von 500 bis 100 000, bevorzugt von 10 000 bis 80 000, besonders bevorzugt von 15 000 bis 40 000 oder Blends enthaltend wenigstens ein solches Polycarbonat oder Copolycarbonat. Weiterhin bevorzugt sind auch Blends der vorgenannten Polycarbonate oder Copolycarbonate mit wenigstens einem Poly- oder Copolykondensat der Terephthalsäure, insbesondere wenigstens einem solchen Poly- oder Copolykondensat der Terephthalsäure mit mittleren Molekulargewichten M_{w}, von 10.000 bis 200.000, bevorzugt von 26.000 bis 120.000. In besonders bevorzugten Ausführungsformen der Erfindung handelt es sich bei dem Blend um einen Blend aus Polycarbonat oder Copolycarbonat mit Poly- oder Copolybutylenterephthalat. Bei einem solchen Blend aus Polycarbonat oder Copolycarbonat mit Poly- oder Copolybutylenterephthalat kann es sich bevorzugt um einen solchen mit 1 bis 90 Gew.-% Polycarbonat oder Copolycarbonat und 99 bis 10 Gew.-% Poly- oder Copolybutylenterephthalat, vorzugsweise mit 1 bis 90 Gew.-% Polycarbonat und 99 bis 10 Gew.-% Polybutylenterephthalat handeln, wobei sich die Anteile zu 100 Gew.-% addieren. Besonders bevorzugt kann es sich bei einem solchen Blend aus Polycarbonat oder Copolycarbonat mit Poly- oder Copolybutylenterephthalat um einen solchen mit 20 bis 85 Gew.-% Polycarbonat oder Copolycarbonat und 80 bis 15 Gew.-% Poly- oder Copolybutylenterephthalat, vorzugsweise mit 20 bis 85 Gew.-% Polycarbonat und 80 bis 15 Gew.-% Polybutylenterephthalat handeln, wobei sich die Anteile zu 100 Gew.-% addieren. Ganz besonders bevorzugt kann es sich bei einem solchen Blend aus Polycarbonat oder Copolycarbonat mit Poly- oder Copolybutylenterephthalat um einen solchen mit 35 bis 80 Gew.-% Polycarbonat oder Copolycarbonat und 65 bis 20 Gew.-% Poly- oder Copolybutylenterephthalat, vorzugsweise mit 35 bis 80 Gew.-% Polycarbonat und 65 bis 20 Gew.-% Polybutylenterephthalat handeln, wobei sich die Anteile zu 100 Gew.-% addieren.

Als Polycarbonate oder Copolycarbonate eignen sich in bevorzugten Ausführungsformen besonders aromatische Polycarbonate oder Copolycarbonate.

Die Polycarbonate oder Copolycarbonate können in bekannter Weise linear oder verzweigt sein.

Die Herstellung dieser Polycarbonate kann in bekannter Weise aus Diphenolen, Kohlensäurederivaten, gegebenenfalls Kettenabbrechern und gegebenenfalls Verzweigern erfolgen. Einzelheiten der Herstellung von Polycarbonaten sind in vielen Patentschriften seit etwa 40 Jahren niedergelegt. Beispielhaft sei hier nur auf Schnell, "Chemistry and Physics of Polycarbonates", Polymer Reviews, Volume 9, Interscience Publishers, New York, London, Sydney 1964, auf D. Freitag, U. Grigo, P. R. Müller, H. Nouvertne', BAYER AG, "Polycarbonates" in Encyclopedia of Polymer Science and Engineering, Volume 11, Second Edition, 1988, Seiten 648-718 und schließlich auf Dres. U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Geeignete Diphenole können beispielsweise Dihydroxyarylverbindungen der allgemeinen Formel (I) sein,

HO-Z-OH (I)

worin Z ein aromatischer Rest mit 6 bis 34 C-Atomen ist, der einen oder mehrere gegebenenfalls substituierte aromatische Kerne und aliphatische oder cycloaliphatische Reste bzw. Alkylaryle oder Heteroatome als Brückenglieder enthalten kann.

Besonders bevorzugte Dihydroxyarylverbindungen sind Resorcin, 4,4'-Dihydroxydiphenyl, Bis-(4-hydroxyphenyl)-diphenyl-methan, 1,1- -Bis-(4-hydroxyphenyl)-1 -phenyl-ethan, Bis-(4-hydroxyphenyl)- 1 -(1 -naphthyl)-ethan, Bis-(4-hydroxyphenyl)-1 -(2-naphthyl)-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan, 1,1-Bis-(3,5-dimethyl-4-hydroxyphenyl)-cyclohexan, 1,1-Bis-(4-hydroxyphenyl)-3,3,5-trimethyl-cyclohexan, 1,1'-Bis-(4-hydroxyphenyl)-3-diisopropyl-benzol und 1,1'- Bis-(4-hydroxyphenyl)-4-diisopropyl-benzol.

Ganz besonders bevorzugte Dihydroxyarylverbindungen sind 4,4'-Dihydroxydiphenyl, 2,2-Bis-(4-hydroxyphenyl)-propan und 1,1-Bis-(4-hydroxyphenyl)-3,3,5-trimethyl-cyclohexan.

Ein ganz besonders bevorzugtes Copolycarbonat kann unter Verwendung von 1,1-Bis-(4-hydroxyphenyl)-3,3,5-trimethyl-cyclohexan und 2,2-Bis-(4-hydroxyphenyl)-propan hergestellt werden.

Geeignete Kohlensäurederivate können beispielsweise Diarylcarbonate der allgemeinen Formel (II) sein, 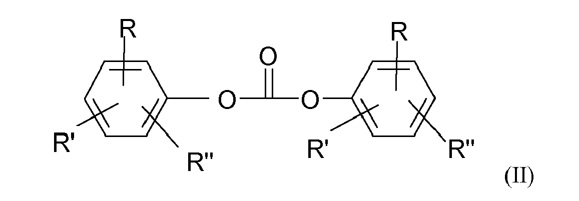 worin
- R, R'und R": unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R'" für Wasserstoff, lineares oder verzweigtes C₁-C₃₄-Alkyl, C₇-C₃₄-Alkylaryl oder C₆-C₃₄-Aryl steht.

Besonders bevorzugte Diarylverbindungen sind Diphenylcarbonat, 4-tert-Butylphenyl-phenylcarbonat, Di-(4-tert-butylphenyl)-carbonat, Biphenyl-4-yl-phenyl-carbonat, Di-(biphenyl-4-yl)-carbonat, 4-(1-Methyl-1-phenylethyl)-phenyl-phenyl-carbonat, Di- 4-(1-methyl-1-phenylethyl)-phenyl]-carbonat und Di-(methylsalicylat)-carbonat.

Ganz besonders bevorzugt ist Diphenylcarbonat.

Es können sowohl ein Diarylcarbonat als auch verschiedene Diarylcarbonate verwendet werden.

Zur Steuerung bzw. Veränderung der Endgruppen können zusätzlich beispielsweise eine oder mehrere Monohydroxyarylverbindung(en) als Kettenabbrecher eingesetzt werden, die nicht zur Herstellung des oder der verwendeten Diarylcarbonat(e) verwendet wurde(n). Dabei kann es sich um solche der allgemeinen Formel (III) handeln, 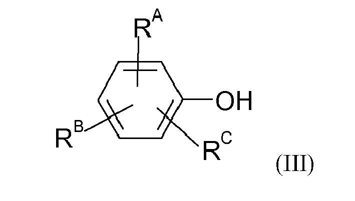 wobei
- R^{A}: für lineares oder verzweigtes C₁-C₃₄-Alkyl, C₇-C₃₄-Alkylaryl, C₆-C₃₄-Aryl oder für -COO-R^{D} steht, wobei R^{D} für Wasserstoff, lineares oder verzweigtes C₁-C₃₄-Alkyl, C₇-C₃₄-Alkylaryl oder C₆-C₃₄-Aryl steht, und
- R^{B}, R^{C}: unabhängig voneinander gleich oder verschieden für Wasserstoff, lineares oder verzweigtes C₁-C₃₄-Alkyl, C₇-C₃₄-Alkylaryl oder C₆-C₃₄-Aryl stehen.

Bevorzugt sind 4-tert-Butylphenol, 4-iso-Octylphenol und 3-Pentadecylphenol.

Geeignete Verzweiger können Verbindungen mit drei und mehr funktionellen Gruppen, vorzugsweise solche mit drei oder mehr Hydroxylgruppen.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Als Poly- oder Copolykondensate der Terephthalsäure eignen sich in bevorzugten Ausführungsformen der Erfindung Polyalkylenterephthalate. Geeignete Polyalkylenterephthalate sind beispielsweise Reaktionsprodukte aus aromatischen Dicarbonsäuren oder ihren reaktionsfähigen Derivaten (z. B. Dimethylestern oder Anhydriden) und aliphatischen, cylcoaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl-Hanser-Verlag, München 1973).

Bevorzugte Polyalkylenterephthalate enthalten mindestens 80 Mol-%, vorzugsweise 90 Mol-% Terephthalsäurereste , bezogen auf die Dicarbonsäurekomponente, und mindestens 80 Mol-%, vorzugsweise mindestens 90 Mol-% Ethylenglykol- und/oder Butandiol-1,4-Reste, bezogen auf die Diolkomponente.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie beispielsweise Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure.

Die bevorzugten Polyalkylenterephthalate können neben Ethylen- bzw. Butandiol-1,4-glykol-Resten bis zu 20 Mol-% anderer aliphatischer Diole mit 3 bis 12 C-Atomen oder cycloaliphatischer Diole mit 6 bis 21 C-Atomen enthalten, z. B. Reste von Propandiol-1,3, 2-Ethylpropandiol-1,3, Neopentylglykol, Pentan-diol-1,5, Hexandiol-1,6, Cyclohexan-dimethanol-1,4, 3-Methylpentandiol-2,4, 2-Methylpentandiol-2,4, 2,2,4-Trimethylpentandiol-1,3 und 2-Ethylhexandiol-1,6, 2,2-Diethylpropandiol-1,3, Hexandiol-2,5, 1,4-Di-([beta]-hydroxyethoxy)-benzol, 2,2-Bis-(4-hydroxycyclohexyl)-propan, 2,4-Dihydroxy-1, 1,3,3-tetramethyl-cyclobutan, 2,2-Bis-(3-[beta]-hydroxyethoxyphenyl)-propan und 2,2-Bis-(4-hydroxypropoxyphenyl)-propan (vgl. DE-OS 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, wie sie z. B. in der DE-OS 19 00 270 und der US-PS 3 692 744 beschrieben sind, verzweigt werden. Beispiele bevorzugter Verzweigungsmittel sind Trimesinsäure, Trimellitsäure, Trimethylolethan und -propan und Pentaerythrit.

Vorzugsweise wird nicht mehr als 1 Mol-% des Verzweigungsmittels, bezogen auf die Säurekomponente, verwendet.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 hergestellt worden sind, und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die als Komponente vorzugsweise verwendeten Polyalkylenterephthalate besitzen bevorzugt eine intrinsische Viskosität von ca. 0,4 bis 1,5 d1/g, vorzugsweise 0,5 bis 1,3 dl/g, jeweils gemessen in Phenol/o-Dichlorbenzol (1:1 Gew.-Teile) bei 25°C.

In bevorzugten Ausführungsformen des erfindungsgemäßen Verfahrens enthält die Kunststofffolie wenigstens ein Polycarbonat oder Copolycarbonat.

In bevorzugten Ausführungsformen des erfindungsgemäßen Verfahrens enthält der thermoplastische Kunststoff wenigstens ein Polycarbonat oder Copolycarbonat, ein Polyacrylat oder Copolyacrylat, ein Poly(meth)acrylat oder Copoly(meth)acrylat oder ein Acrylnitril-Butadien-Styrol-Copolymerisat (ABS).

Bevorzugt werden die nicht zu hinterspritzenden Bereiche der Kunststofffolie in Schritt A) mit einem oder mehreren Stempeln oder Schiebern abgedeckt, damit eine oder mehrere Teilflächen der Kunststofffolie nicht hinterspritzt werden.

In bevorzugten Ausführungsformen des erfindungsgemäßen Verfahrens ist (sind) nach dem Hinterspritzen die nicht hinterspritzte(n) Teilfläche(n) der Kunststofffolie vollständig von hinterspritzten Teilflächen der Kunststofffolie umgeben. In besonders bevorzugten Ausführungsformen des erfindungsgemäßen Verfahrens werden in Schritt A) mehrere, nicht zusammenhängende Teilflächen der Kunststofffolie nicht hinterspritzt und die nicht hinterspritzten Teilflächen der Kunststofffolie sind nach dem Hinterspritzen vollständig von hinterspritzten Teilflächen der Kunststofffolie umgeben.

Bevorzugt erfolgt das Hinterspritzen in Schritt A) mittels Fenstertechnik. Diese Fenstertechnik, bei der die nicht zu hinterspritzenden Bereiche der Kunststofffolie in Schritt A) mit einem oder mehreren Stempeln oder Schiebern abgedeckt, damit eine oder mehrere Teilflächen der Kunststofffolie nicht hinterspritzt werden, ist dem Fachmann bekannt.

Das Hinterspritzen der Kunststofffolie erfolgt nach dem Fachmann bekannten Verfahren. Beispielsweise kann hierzu eine Kunststofffolie in eine erste Hälfte eines geöffneten Spritzgießwerkzeugs eingelegt und anschließend das Werkzeug geschlossen werden, indem eine zweite Hälfte des Werkzeugs auf der ersten Hälfte angebracht wird, so dass zwischen Folie und zweiter Werkzeughälfte eine Kavität (Spalt, Hohlraum) entsteht, und dann die Kunststofffolie im Werkzeug mit thermoplastischen Kunststoff hinterspritzt werden, indem der thermoplastische Kunststoff in die Kavität eingebracht wird. Dabei können die zum Abdecken der nicht zu hinterspritzenden Bereiche eingesetzten Stempel oder Schieber bevorzugt auf der zweiten Hälfte des Werkzeuges angebracht sein und beim Schließen des Werkzeuges die freizuhaltenden Bereiche abdecken.

Für den Fall, dass eine einseitig bedruckte Kunststofffolie in Schritt A) eingesetzt wird, kann diese entweder mit der bedruckten Seite zur Werkzeugwand hin oder mit der bedruckten Seite von der Werkzeugwand weg gerichtet in die erste Werkzeughälfte eingelegt werden.

Nach dem Hinterspritzen wird das Werkzeug nach der teilweisen oder vollständigen Abkühlung in Schritt B) geöffnet. Schritt C) kann dann nach dem Öffnen des Werkzeuges in einer der beiden Werkzeughälften erfolgen. Alternativ kann das Kunststoffformteil auch nach dem Abkühlen in Schritt B) aus dem Werkzeug entnommen werden und Schritt C) außerhalb des Werkzeuges erfolgen. Das Kunststoffformteil kann auch vor Erreichen der beabsichtigten vollständigen Abkühlung aus dem Werkzeug entnommen und außerhalb des Werkzeugs die Abkühlung vervollständigt werden. Diese Vorgehensweise kann beispielsweise den Vorteil aufweisen, dass in bestimmten Ausführungsformen der vorliegenden Erfindung eine ausreichende Schwindung des unter Schritt A) erhaltenen Formteils mit der noch verbleibenden Werkzeugtemperatur in Schritt B) nicht oder nicht schnell genug erreicht werden kann.

Das Abkühlen des unter Schritt A) erhaltenen Kunststoffformteils in Schritt B) vor dem erneuten Erhitzen in Schritt C) erfolgt bevorzugt auf eine Temperatur bei der die vollständige Schwindung und/oder der vollständige Schrumpf des unter Schritt A) erhaltenen Kunststoffformteils erfolgen kann. Vorzugsweise erfolgt das Abkühlen des unter Schritt A) erhaltenen Kunststoffformteils in Schritt B) vor dem erneuten Erhitzen in Schritt C) auf eine Temperatur von unter 60°C, besonders bevorzugt von unter 50°C, ganz besonders bevorzugt von unter 40°C. Dabei ist es weiterhin bevorzugt, dass die Temperatur, auf die das unter Schritt A) erhaltene Kunststoffformteil in Schritt B) vor dem erneuten Erhitzen in Schritt C) nicht unterkühlt, d.h. nicht auf eine Temperatur unterhalb von 0°C, bevorzugt nicht auf eine Temperatur unterhalb von 10°C abgekühlt wird. In bevorzugten Ausführungformen erfolgt das Abkühlen des unter Schritt A) erhaltenen Kunststoffformteils in Schritt B) vor dem erneuten Erhitzen in Schritt C) auf Raumtemperatur, wobei unter Raumtemperatur im Rahmen der Erfindung eine Temperatur von 15 bis 25°C, insbesondere von 23°C zu verstehen ist.

Die Kunststofffolie ist in den nicht hinterspritzten Bereichen bevorzugt wenigstens teilflächig transparent oder transluzent, d.h. lichtdurchlässig, um ein Hinterleuchten an diesen transparenten oder transluzenten Bereichen zu ermöglichen. Die Kunststofffolie kann für Licht im sichtbaren Wellenlängenbereich in den nicht hinterspritzten Bereichen wenigstens teilflächig zu 100 % durchlässig sein, bevorzugt ist die Kunststofffolie in den nicht hinterspritzten Bereichen wenigstens teilflächig transluzent. Dabei ist im Rahmen der Erfindung unter Transluzenz eine Transmission von Licht im sichtbaren Wellenlängenbereich von mehr als 20 % und weniger als 100 %, bevorzugt von mehr als 50 % und weniger als 100 %, besonders bevorzugt von mehr als 70 % und weniger als 100 % zu verstehen. Der sichtbare Wellenlängenbereich des Lichtes erstreckt sich über den Wellenlängenbereich von 380 bis 780 nm. Die Lichttransmission kann mit einem Hunter UltraScanPRO mit einer diffus/8° Geometrie gemessen werden.

Es ist aber auch möglich, dass die Kunststofffolie ist in den nicht hinterspritzten Bereichen wenigstens teilflächig weder transparent noch transluzent ist, um beispielsweise Bedienelement, z.B. kapazitive Schaltungen oder mechanische Schalter, zugänglich zu machen.

Weiterhin Gegenstand der vorliegenden Erfindung ist ein Kunststoffformteil, welches nach dem erfindungsgemäßen Verfahren erhältlich ist.

Nach dem erfindungsgemäßen Verfahren hergestellte Kunststoffformteile eignen sich beispielsweise für den Einsatz in Elektronikgeräten, Haushaltsgeräten, Handys, Computern, wie z.B. für Computer-Tastaturen, im Fahrzeuginnenbereich, wie z.B. im Automobilinnenbereich sowie im Luftfahrzeugoder Schienenfahrzeuginnenbereich etc.. Nach dem erfindungsgemäßen Verfahren hergestellte Kunststoffformteile können in diesen Anwendungen beispielsweise als Bedienelemente eingesetzt werden, die dem Benutzer auch im Dunkeln durch Hinterleuchtung zugänglich sein sollen.

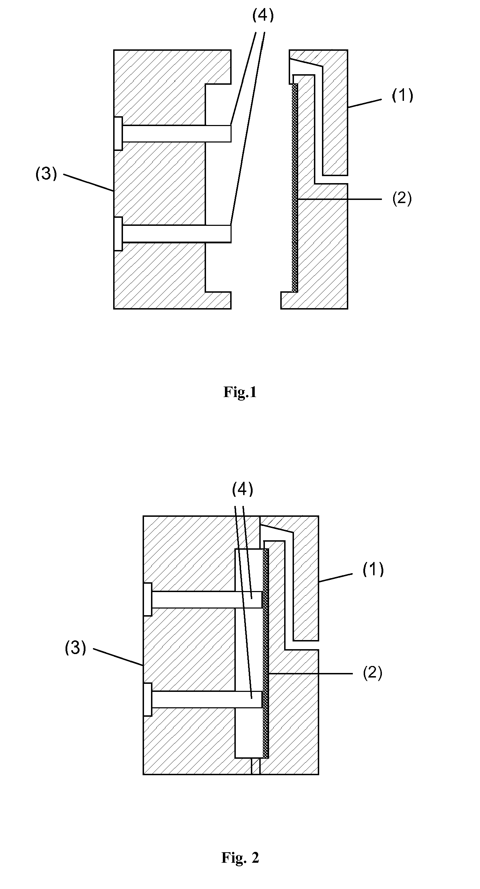

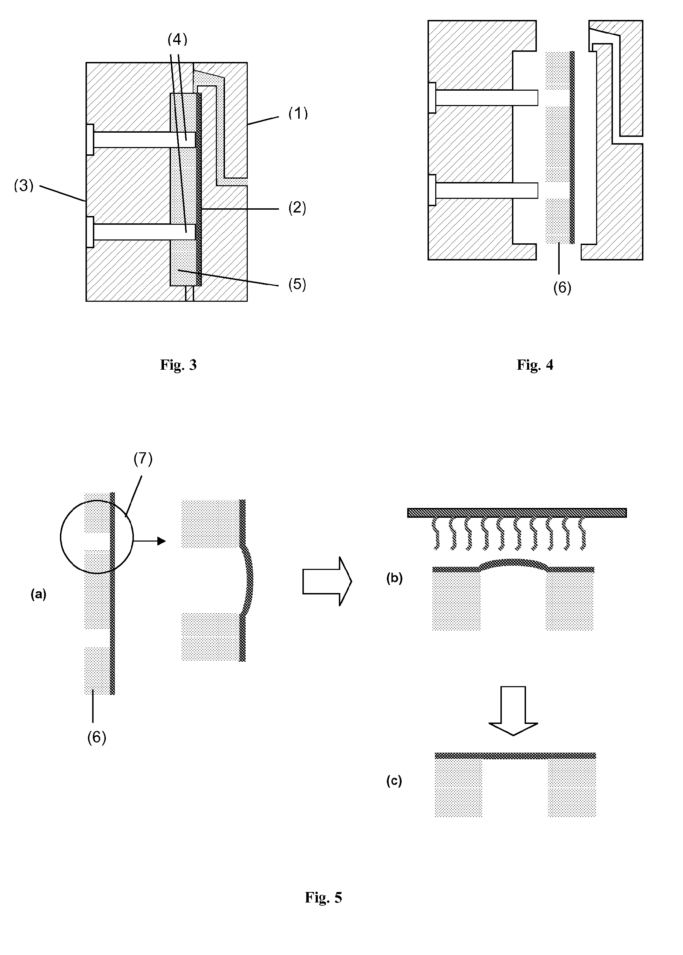

Die Figuren 1 bis 5 beschreiben schematisch die Herstellung eines erfindungsgemäßen Kunststoffformteils mittels einer Ausführungsform der Fenstertechnik.
Fig. 1 zeigt eine in eine Werkzeughälfte (1) eines geöffneten Spritzgießwerkzeugs eingelegte Kunststofffolie (2). Dabei sind an der zweiten Werkzeughälfte (3) Stempel (4) zum Abdecken der nicht zu hinterspritzenden Bereiche angebracht.
Fig. 2 zeigt das die Kunststofffolie (2) enthaltende geschlossene Spritzgießwerkzeug, wobei die an der zweiten Werkzeughälfte (3) angebrachten Stempel (4) die nicht zu hinterspritzenden Bereiche der Kunststofffolie (2) zum Inneren des Werkzeuges hin abdecken.
Fig. 3 zeigt das geschlossene Spritzgießwerkzeug, worin die Kunststofffolie (2) in den nicht mit den Stempeln (4) abgedeckten Bereichen mit thermoplastischen Kunststoff (5) hinterspritzt wurde.
Fig. 4 zeigt das geöffnete Spritzgießwerkzeug, aus dem nach dem Abkühlen das Kunststoffformteil (6) entnommen wird.
Fig. 5 zeigt einen Ausschnitt (7) aus dem Kunststoffformteil (6), welches nach dem Abkühlen dem Spritzgießwerkzeug entnommen wurde, wobei die Beule in dem nicht hinterspritzten Bereich zu erkennen ist (vgl. (a)). Fig. 5 zeigt außerdem, wie diese Beule durch erfindungsgemäßes Erhitzen (vgl. (b)) beseitigt und eine ebene Oberfläche in dem nicht hinterspritzten Bereich (vgl. (c))erzielt wird.

Die folgenden Beispiele dienen der beispielhaften Erläuterung der Erfindung und sind nicht als Beschränkung aufzufassen.

### Beispiele

Es wurden drei Polycarbonatfolien (Makrofol^{®} DE) mit unterschiedlicher Dicke von 150 µm, 175 µm und 200 µm (Glasübergangstemperatur Tg: 145°C) sowie eine Folie aus einem Polycarbonat-Polybuthylentherephthalat-Blend (Bayfol^{®} CR) mit einer Schichtdicke von 375 µm (Glasübergangstemperatur Tg: 125°C) im Vorfeld mit einer Siebdruckfarbe bedruckt. Als Siebdruckfarbe wurde Noriphari^{®} HTR verwendet.

Die Glasübergangstemperatur Tg wurde jeweils mittels dynamischer Differenzkalorimetrie (DSC) gemäß der Norm ISO 113557-2 bei Aufheizrate von 10 K/min, beim zweiten Aufheizen und mit Definition der Tg als Mittelpunkttemperatur (Tangentenmethode) bestimmt.

Die Polycarbonatfolien wurden anschließend in einem Spritzgießwerkzeug mit einem thermoplastischen Polycarbonat (Makrolon^{®} 2405) hinterspritzt. Die Polycarbonat-Polybuthylentherephthalat-Blend-Folie wurde in einem Spritzgießwerkzeug mit einem thermoplastischen Polycarbonat/ABS-Blend (Bayblend^{®} T65) hinterspritzt. Die Versuche wurden auf einer Spritzgießmaschine des Types Arburg Allrounder 570 C mit 200 t Schließkraft gemacht. Dazu wurde ein Plattenwerkzeug mit einer Wanddicke von 2,5 mm mit Durchbrüchen unterschiedlicher Form (teils runde Durchbrüche mit Durchmessern von 10 bis 30 mm, teils rechteckige und quadratische Durchbrüche mit Kantenlängen von 10 bis 30 mm) eingesetzt. Die Schmelzetemperatur lag bei 280 °C und die Werkzeugtemperatur bei 60 °C. Die Füllzeit wurde für das Makrolon^{®} 2405 bzw. Bayblend^{®} T65 mit ca. 2,8 sec gemessen. Um bestimmte Folienbereiche von hinterspritztem Kunststoff frei zu halten, wurde das Verfahren der Fenstertechnik verwendet. Hierzu tuschierten Stempel beim Schließen des Werkzeuges genau an den freizuhaltenden Stellen die Folie. Beim Hinterspritzen wurde so erfolgreich vermieden, dass Kunststoff-Schmelze auf diese Bereiche gelangen konnte. Nach der Füllung wurde das hinterspritzte Formteil auf Raumtemperatur (23°C) abgekühlt. Dabei entstanden in allen vier Fällen (Polycarbonatfolien mit Foliendicke von 150 µm, 175 µm, 200 µm und Polybuthylentherephthalat-Blend-Folie mit Foliendicke von 375 µm) an den nicht hinterspritzten Bereichen Beulen in der Folie.

Um diese Beulen zu beseitigen, wurde das Formteil aus dem Werkzeug entnommen und die Folienbereiche, welche nicht mit Kunststoff hinterspritzt worden sind, mit einem handelsüblichen IR-Keramik-Strahler und alternativ mit einem Heißluftfön kurzzeitig erneut aufgeheizt. Dabei erfolgte das erneute Aufheizen für die Polycarbonatfolien auf eine Temperatur von 175°C und für die Polybuthylentherephthalat-Blend-Folie auf 155°C. Die Temperatur der Folien wurde mit einem handelsüblichen Zeilenpyrometer der Fa. Bartec Messtechnik und Sensorik gemessen, wobei der Abstand der Kamera zur Folienoberfläche 56 cm betrug.

Die Heizzeit wurde für die Versuche im Rahmen von 0,5 bis 5 sec variiert. Ob nun eine lange Heizzeit mit geringerer Strahlerleistung, oder aber eine kurze Heizzeit mit hoher Leistung verwendet wurde, zeigte am Endergebnis keinen Unterschied. Die Bauteile wiesen nach dem erneuten Erhitzen und Abkühlen keine Beulen mehr auf.

## Patentansprüche

1. Verfahren zur Herstellung eines Kunststoffformteils, wobei
A) eine Kunststofffolie auf einer Seite mit wenigstens einem thermoplastischen Kunststoff hinterspritzt wird, wobei eine oder mehrere Teilflächen der Kunststofffolie nicht hinterspritzt werden, und
B) das unter Schritt A) erhaltene Kunststoffformteil abgekühlt wird,
**dadurch gekennzeichnet, dass**
C) anschließend wenigstens die nicht hinterspritzten Bereiche des unter Schritt B) erhaltenen Kunststoffformteils erneut erhitzt werden.

2. Verfahren gemäß Anspruch 1, **dadurch gekennzeichnet, dass** die in Schritt A) eingesetzte Kunststofffolie verformt ist.

3. Verfahren gemäß Anspruch 1 oder 2, **dadurch gekennzeichnet, dass** die in Schritt A) eingesetzte Kunststofffolie einseitig bedruckt ist.

4. Verfahren gemäß wenigstens einem der Ansprüche 1 bis 3, **dadurch gekennzeichnet, dass** in Schritt C) wenigstens die nicht hinterspritzten Bereiche des unter Schritt B) erhaltenen Kunststoffformteils auf wenigstens eine Temperatur im Bereich oberhalb der Temperatur von 70°C unterhalb der Glasübergangstemperatur Tg des Kunststoffs der Kunststofffolie erhitzt werden.

5. Verfahren gemäß wenigstens einem der Ansprüche 1 bis 4, **dadurch gekennzeichnet, dass** in Schritt C) wenigstens die nicht hinterspritzten Bereiche des unter Schritt B) erhaltenen Kunststoffformteils auf wenigstens eine Temperatur im Bereich von 50°C unterhalb der Glasübergangstemperatur Tg bis 50°C oberhalb der Glasübergangstemperatur Tg des Kunststoffs der Kunststofffolie erhitzt werden.

6. Verfahren gemäß wenigstens einem der Ansprüche 1 bis 5, **dadurch gekennzeichnet, dass** wenigstens die nicht hinterspritzten Bereiche des unter Schritt B) erhaltenen Kunststoffformteils für weniger als 20 Sekunden, bevorzugt für weniger als 15 sec, besonders bevorzugt für weniger als 10 sec auf die genannte(n) Temperatur(en) erhitzt werden.

7. Verfahren gemäß wenigstens einem der Ansprüche 1 bis 6, **dadurch gekennzeichnet, dass** die Kunststofffolie eine Dicke von 50 µm bis 500 µm, bevorzugt von 75 µm bis 400 µm, besonders bevorzugt von 100 µm bis 300 µm aufweist.

8. Verfahren gemäß wenigstens einem der Ansprüche 1 bis 7, **dadurch gekennzeichnet, dass** die Kunststofffolie wenigstens ein Polycarbonat oder Copolycarbonat enthält.

9. Verfahren gemäß wenigstens einem der Ansprüche 1 bis 8, **dadurch gekennzeichnet, dass** der thermoplastische Kunststoff wenigstens ein Polycarbonat oder Copolycarbonat, ein Polyacrylat oder Copolyacrylat, ein Poly(meth)acrylat oder Copoly(meth)acrylat oder ein Acrylnitril-Butadien-Styrol-Copolymerisat (ABS) enthält.

10. Verfahren gemäß wenigstens einem der Ansprüche 1 bis 9, **dadurch gekennzeichnet, dass** die Kunststofffolie in den nicht hinterspritzten Bereichen wenigstens teilflächig transparent oder transluzent ist.

11. Verfahren gemäß wenigstens einem der Ansprüche 1 bis 10, **dadurch gekennzeichnet, dass** die nicht zu hinterspritzenden Bereiche der Kunststofffolie in Schritt A) mit einem oder mehreren Stempeln oder Schiebern abgedeckt werden.

12. Verfahren gemäß wenigstens einem der Ansprüche 1 bis 11, **dadurch gekennzeichnet, dass** die nicht hinterspritzte(n) Teilfläche(n) der Kunststofffolie vollständig von hinterspritzten Teilflächen der Kunststofffolie umgeben ist (sind).

13. Verfahren gemäß wenigstens einem der Ansprüche 1 bis 12, **dadurch gekennzeichnet, dass** in Schritt A) mehrere, nicht zusammenhängende Teilflächen der Kunststofffolie nicht hinterspritzt werden und die nicht hinterspritzten Teilflächen der Kunststofffolie vollständig von hinterspritzten Teilflächen der Kunststofffolie umgeben sind.

14. Verfahren gemäß wenigstens einem der Ansprüche 1 bis 13, **dadurch gekennzeichnet, dass** das Hinterspritzen in Schritt A) mittels Fenstertechnik erfolgt.

15. Kunststoffformteil erhältlich nach dem Verfahren gemäß wenigstens einem der Ansprüche 1 bis 14.
